(19) Europäisches Patentamt / European Patent Office / Office européen des brevets

(11) **EP 4 564 811 A1**

(12) **EUROPEAN PATENT APPLICATION**

(43) Date of publication:
**04.06.2025 Bulletin 2025/23**

(21) Application number: **24204095.4**

(22) Date of filing: **02.10.2024**

(51) International Patent Classification (IPC):
**H04N 19/117** (2014.01)

(52) Cooperative Patent Classification (CPC):
**H04N 19/176; H04N 19/117; H04N 19/124;**
**H04N 19/137; H04N 19/142; H04N 19/573;**
**H04N 19/86**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.11.2023 US 202318525444**

(71) Applicant: **INTEL Corporation**
**Santa Clara, CA 95054 (US)**

(72) Inventors:
• **Sun, Minzhi**
  **Bellevue WA, 98006 (US)**
• **Zhang, Ximin**
  **San Jose CA, 95129 (US)**
• **Chiu, Yi-Jen**
  **San Jose CA, 95129 (US)**

(74) Representative: **Samson & Partner Patentanwälte**
**mbB**
**Widenmayerstraße 6**
**80538 München (DE)**

(54) **METHOD AND SYSTEM OF MOTION COMPENSATED TEMPORAL FILTERING FOR EFFICIENT VIDEO CODING**

(57) Methods, articles, and systems of image processing comprise obtaining image data of frames of a video sequence. The method also includes determining multiple reference frames of a current frame in the video sequence. The multiple reference frames each have at least one motion compensated (MC) block of image data. Also, the method then includes generating a weight that factors noise, distortion variance, and dispersion distribution between the same MC block position and the current block. Thereafter, the method includes generating denoised filtered image data comprising applying one of the weights to the image data of the motion compensated (MC) block.

FIG. 1

**Description**

BACKGROUND

As video coding and streaming becomes more commonly used, the demand for high quality video keeps growing as well. In the coding process, where a video stream is encoded, transmitted to a remote computing device, and decoded, certain pre-processing operations are performed before encoding to better ensure the quality of the resulting decompressed and displayed images of a video and increase coding efficiency. This may include performing denoising before a video is to be encoded or compressed for transmission to another device. Denoising relates to the removal of noise from images in the form of unwanted variations in pixel image data that can cloud or blur an image as well as cause discoloration or luminance errors where the pixels have the wrong image values. This may occur due to poor lighting, malfunctioning or low quality camera sensors, other camera equipment, and/or other reasons.

To perform the denoising, a motion compensated temporal filter (MCTF) technique may be used that generates filtered pixel image values. The MCTF technique compares image data of original frames to image data of motion compensated reference frames. Motion compensated blocks of image data from the reference frames are then weighted to form the filtered image data. Such techniques, however, still prove to be inadequate due to noise and motion vector errors.

BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Furthermore, where considered appropriate, reference labels have been repeated among the figures to indicate corresponding or analogous elements. In the figures:

FIG. 1 is a schematic diagram of an example image processing system to perform motion compensated temporal filtering for video coding according to at least one of the implementations herein;

FIG. 2 is a schematic diagram of an example reference frame selection unit of the system of FIG. 1 according to at least one of the implementations herein;

FIG. 3 is a flow chart of a method of motion compensated temporal filtering for video coding according to at least one of the implementations herein;

FIG. 4 is a detailed flow chart of a method of reference frame selection according to at least one of the implementations herein;

FIGS. 5A-5C is a detailed flow chart of filter weight generation according to at least one of the implementations herein;

FIG. 6 is an illustrative diagram of an example system;

FIG. 7 is an illustrative diagram of another example system; and

FIG. 8 illustrates another example device, all arranged in accordance with at least some implementations of the present disclosure.

DETAILED DESCRIPTION

One or more implementations are now described with reference to the enclosed figures. While specific configurations and arrangements are discussed, it should be understood that this is done for illustrative purposes only. Persons skilled in the relevant art will recognize that other configurations and arrangements may be employed without departing from the spirit and scope of the description. It will be apparent to those skilled in the relevant art that techniques and/or arrangements described herein may also be employed in a variety of other systems and applications other than what is described herein.

While the following description sets forth various implementations that may be manifested in architectures such as system-on-a-chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices and/or consumer electronic (CE) devices such as servers, network devices, set top boxes, smart phones, tablets, mobile devices, computers, etc., may implement the techniques and/or arrangements described herein. Furthermore, while the following description may set forth numerous specific details such as logic implementations, types and interrelationships of system components, logic partitioning/integration choices, etc., claimed subject matter may be practiced without such specific details. In other instances, some material such as, for example, control structures and full software instruction sequences, may not be shown in detail in order not to obscure the material disclosed herein.

The material disclosed herein may be implemented in hardware, firmware, software, or any combination thereof. The material disclosed herein may also be implemented as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. In another form, a non-transitory article, such as a non-transitory computer readable medium, may be used with any of the examples mentioned above or other examples except that it does not include a transitory signal per se. It does include those elements other than a signal per se that may hold data temporarily in a "transitory" fashion such as RAM and so forth.

References in the specification to "one implementation", "an implementation", "an example implementation", etc., indicate that the implementation described may include a particular feature, structure, or characteristic, but every implementation may not necessarily include the particular feature, structure, or characteristic. Moreover, such phrases are not necessarily referring to the same implementation. Furthermore, when a particular feature, structure, or characteristic is described in connection with an implementation, it is submitted that it is within the knowledge of one skilled in the art to affect such feature, structure, or characteristic in connection with other implementations whether or not explicitly described herein.

Systems, articles, and methods are described below that relate to motion compensated temporal filtering for efficient video coding.

During video compression, noise video content causes low encoder efficiency due to the uncorrelated nature of noise, and specifically because (1) noise reduces temporal correlation between video frames, (2) noise reduces spatial correlation of pixel image data within a single frame, and (3) noise increases a bit cost of entropy coding by increasing the number and magnitude of residuals. This results in high total bit cost to perform the coding. In turn, the noise also limits the effectiveness of coding tools used to reduce bit rate distortions and increase performance. It should be noted that the term correlation as used herein is meant in a general sense to refer to similarity and is not limited to a specific mathematical equation unless mentioned otherwise.

A conventional MCTF is often used to attempt to reduce noise to improve encode quality and efficiency. The MCTF filtering is performed before encoding as a pre-processing step and can use multiple reference frames for motion estimation relative to a frame or block being filtered. Specifically, motion estimation (ME) often involves searching for a block of image data on a reference frame that matches a block on the frame being filtered (referred to as the previous block and previous frame). The matches are candidate matches represented by a motion vector (MV) that is then used in motion compensation (MC) to choose a best match among a number of candidate MVs and corresponding matches and for the previous block of the previous frame that was filtered. The matches form a resulting motion compensated (MC) reference frame then can be used to generate weights to apply to the MC reference data of a next or current frame being filtered to generate new filtered image data for a block or frame. The filtered frame replaces the current block or current frame to be input to an encoder, while a motion compensated frame of the current frame can be used as a reference frame for subsequent frames to be filtered.

Also in the conventional MCTF, the motion compensated frames can be compared to the current frame being filtered to obtain relatively crude noise estimates as the difference between the two frames. The differences or noise estimates are then used to determine weights to apply to motion compensated values, which are then added to the original values of the current frame to generate new filtered image data values. MCTF has been adopted by standard reference codec software such as versatile video coding (VVC) test model (VTM), Alliance for Open Media (AOM) for AOmedia video 1 (AV1) codec, and high efficiency video coding (HEVC) test model (HM), as well as optimized software encoders such as scalable video technology (SVT) and versatile video encoder (VVENC). It should be noted that the terms image, frame, and picture are used interchangeably herein.

Regarding selection of the reference frames with the conventional MCTF techniques, however, the algorithms only use the same fixed number of past and future frames as reference frames relative to a current frame being filtered whenever the same number of future and past frames are available. Without some further criteria as to which reference frames to use, reference frames with relatively large differences (or low correlation) in pixel data relative to a current frame being filtered is more likely to introduce larger distortions during temporal filtering and interfere with temporal noise estimation. This can include capturing fluctuations in image data from motion and complex content and erroneously identify such changes as noise. Thus, conventional MCTF is not very adaptable to include only the most relevant or most similar reference frames to the current frame being filtered.

Also regarding the calculation of the weights for conventional MCTF techniques, either the known MCTF algorithms have no reference frame-based weighting at all, or simple and fixed reference frame-based weighting which is distortion based. This does not factor precise noise estimates themselves, and does not factor errors in motion vectors (MVs) from the ME. Without more accurate factoring of distortion, motion vector (MV) errors, and noise level between reference frames and the current frame being filtered, such a conventional MCTF technique is not adequately adaptable to image content such that noise reduction is inadequate, and image quality and encoder efficiency are all still too low.

To resolve these issues, the disclosed method and system of video coding has preprocessing with denoising that uses an MCTF with adaptable reference frame selection based on video content analysis. Additionally, or alternatively, the MCTF method used herein computes weights based on robust multiple measurements (or statistics) of the image data distortions between multiple reference frames and a current frame being filtered, thereby providing highly accurate correlation (or distortion) measurement between reference and current blocks or frames.

More specifically, the disclosed method and system for operating a MCTF includes selecting reference frames depending on (1) encoder parameters such as the coding and rendering modes, and in turn group-of-pictures (GOP) configuration, used by the encoder, (2) whether a scene change is near the current frame being filtered, and/or (3) correlation between each initially available reference frame (or still available after applying (1) and (2)) and the current frame being filtered. For this disclosed highly adaptable reference frame selection, the number of reference frames to be used for MCTF can vary from current frame to current frame, or even block to block, being filtered. Also, the number of past and future reference frames can be different including zero.

Thus, the disclosed adaptive reference frame selection is adaptive to video characteristics to better ensure that reference frames are selected that have image data with a certain minimum correlation to a current frame (or current blocks) being filtered so that the MCTF more accurately distinguishes between noise on the one hand and motion, image complexity, or other intentional image content on the other hand. Also, the number and position of reference frames within a video sequence is limited due to a scene change or due to the coding or encoder mode being used. This results in highly adaptable reference frame selection that substantially increases coding efficiency including both image quality and compression rates.

With regard to the weights, for the MCTF, the disclosed method and system determine weights based on statistics of block distortions, noise level, and encode parameters. Particularly, the weights are determined by aggregately or collectively factoring distribution of distortions among the reference frames being used for a current frame, noise level of the image content, and encode parameters such as a base or other quantization parameter (QP) of the encoder to be used after preprocessing. By one form, the distribution of distortion includes both a dispersion distribution (DD) and distortion variance of the group of comparisons of motion compensated frame or blocks generated by using the reference frames, and the current frame or block being filtered. The weight computation also includes a noise factor that is generated by computing an estimated noise level in the motion compensated image or frame relative to the current frame being filtered.

In the disclosed MCTF solution, the reference frame weighting also may be considered highly adaptive since the weights are at least partly based on dispersion distribution, distortion variance, encoder QP, noise level, and in turn image content. This adaptability plus the in-depth analysis of various measurements of the differences of the motion compensated frames or blocks and the current frame or block provides very accurate and improved noise reduction and encode efficiency. Since an MCTF unit or module may be a standalone module, the MCTF here can be added before any encoders, for example AVC, HEVC, AV1, VP9, WC, and so forth.

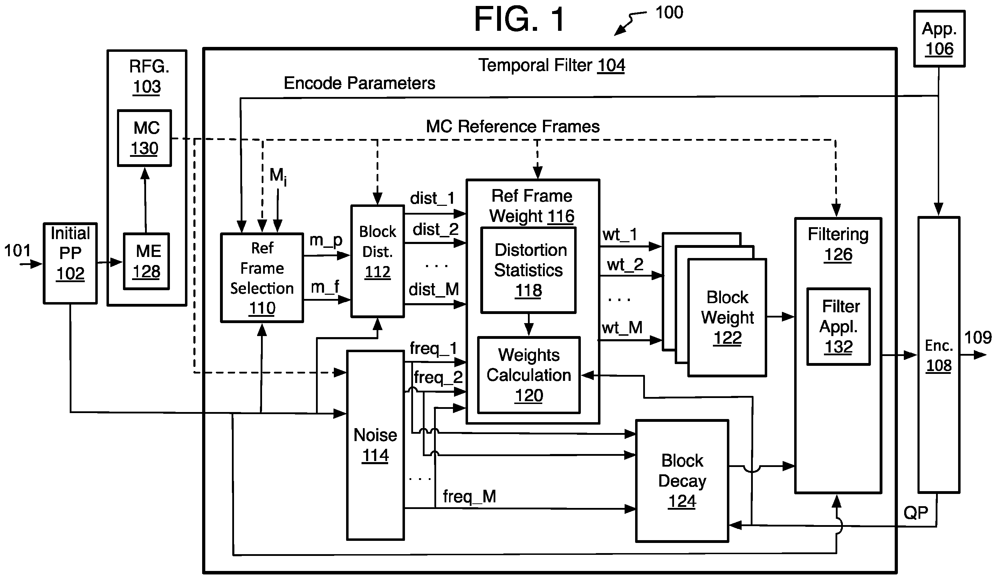

Referring to FIG. 1, an example image processing (or video coding) system 100 receives non-compressed video input 101 from a memory or other source, and provides image content, which may be raw image content, to an initial pre-processing (PP) unit 102 that formats the image data sufficiently for denoising and encoding. The video input 101 may be in the form of frames of one or more video sequences of any content format whether natural camera captured images or synthetic, and of any resolution or color scheme. The initial pre-processing may include demosaicing and/or color scheme conversion, such as from RGB to YUV, where each color scheme channel may be processed separately including the denoising and encoding. The video sequence frames are not particularly limited to a resolution or other video parameters as long as it in compliance with the coding codec being used. The frames of the video input may be provided to the initial pre-processing unit 102 in display order.

The initially pre-processed image data or frames are then provided to a reference frame generation (RFG) unit 103 that has a motion estimation (ME) unit 128 and a motion compensation (MC) unit 130 in order to generate a new MC reference frame, and by using other frames in the initial video sequence 101 for the motion estimation (these reference fames are not yet motion compensated). In some systems, motion estimation may be performed externally to the system 100 or may be considered part of preprocessing unit 102 or MCTF 104 when desired. Although the motion estimation may be based on a codec, it may not be limited to having the number of past reference frames equal to the number of future reference frames. Specifically, the motion estimation and motion compensation may be performed by many different techniques, such as known codecs such as VTM or AOM. Output MVs from ME could be in block size 8x8 (VTM) or 16x16 (AOM) and have 1/16 pel precision (VTM) or 1/8 pel precision (AOM). Interpolation filters used in MC could be 6 tap (VTM) or 8 tap (AOM). This may include those techniques that use alternative candidate reference block sizes and patterns for the same pixel area on a current frame being filtered, and the MC selects the best match among the alternative blocks. It should be noted that the block size, shape, and positions for the MC and ME may be completely different than the blocks used for the reference frame selection and weight computations.

The total number of available frame $M_i$ may be preset for ME unit 128 to use as reference frames, and the coding is performed in display order. The system 100 or MCTF 104 may have an input or configuration parameter to control which frames are to be filtered, and in turn which frames are to be used as current frames for ME and MC, rather than performing ME and MC for every frame although that could be done instead. The result is $M_i$ available MC reference frames in the past or future relative to a current frame being filtered.

Both the initially pre-processed image data (or frames) and the MC reference frames are then provided to a temporal filter unit 104, which also may be considered a pre-processing unit and may or may not be in the same unit as the initial pre-processing unit 102. The temporal filter unit 104 (or just MCTF 104) may be the motion compensation temporal filter (MCTF) or a denoising unit to perform the denoising as described herein. Thus, the MCTF 104 filtering is a pre-processing operation added before an encoder 108. By one form, the video input 101 of source raw video frames is input to the MCTF 104 in display order. Output of the filtered video frames from the MCTF 104 also may be in display order, which may be fed into the encoder for compression. The MCTF 104 receives MC reference frames in display order as well to perform temporal filtering on a current frame (or block) as an enhanced bilateral filter.

The pre-processed and denoised image data is then provided to an encoder 108 to output encoded video 109 for transmission to remote decoders for example. The system 100 also may have, or communicate with, one or more image processing application unit 106 that may be involved with setting parameters at the encoder 108 and the temporal filter unit 104. The application unit 106 may provide stored parameters for an application that can use the frames after decoding the frames at a remote device. The application with the application unit 106 may be any display or image analysis application whether for rendering the frames for display on televisions, computer monitors, or mobile devices, and/or providing the frames for processing such as for depth analysis, 3D modeling, and/or object recognition such as for VR or AR headsets or other systems, for example. The application unit 106 may provide a desired coding and rendering mode such as low delay, random access, and others as described below.

The temporal filter unit 104 may have a reference frame selection (RFS) unit 110, a block distortion unit 112, a noise estimation unit 114, and a reference frame weight unit 116 that has a distortion statistics unit 118 and a weights calculation unit 120. The reference frame weights unit 116 generates block weights 122. The temporal filter unit 104 also may have a block decay unit 124 and a filtering unit 126 that has a filter application unit 132. The reference frame selection (RFS) unit 110, the block distortion unit 112, the noise unit 114, and the filtering unit 126 all may receive the initially pre-processed images or frames, and which may be received block by block, from the initial PP unit 102. It will be understood that any one or more of these units may be on one physical device or at one physical location, but otherwise any one or more of these units may be on a separate remote device and/or remote location.

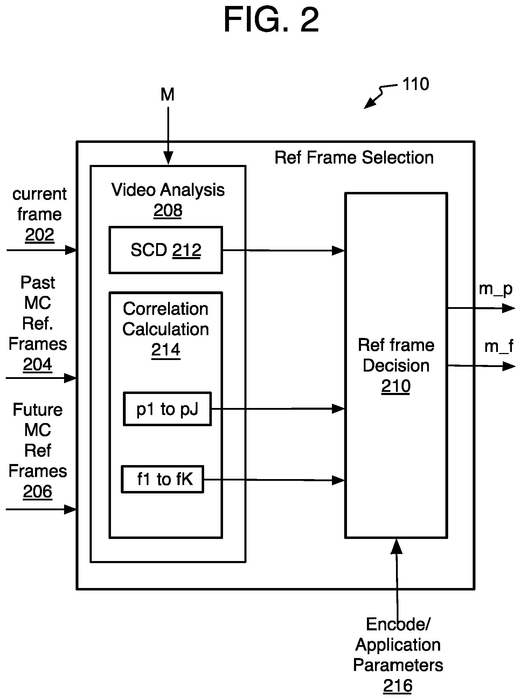

In more detail and while referring to FIG. 2, the RFS unit 110 receives image data of the initially pre-processed current frame 202 from the initial PP unit 102, and whether as an entire frame or block by block as the blocks are being analyzed. The RFS unit 110 also receives past and future MC reference frames 204 and 206 generated by the RFG unit 103 and by performing motion estimation and motion compensation. The reference frames may be referred to herein as motion compensated (MC) reference frames or just reference frames. Although unfiltered frames of the video sequence could be used as reference frames for the reference frame selection, the MC reference frames are used in the examples herein to better ensure the high quality of the images. The RFS 110 also receives a maximum number of initially available reference frames $M_i$ to be used either with a particular current frame or with a particular current block on the current frame, such that $M_i$ could be different from block to block when desired. The maximum reference frame amount $M_i$ may be a previously stored value, or a value obtained from encoder or application parameters, and/or a preset adjustable value, such as with firmware, and so forth. The maximum reference frame amount also may be used by the RFG unit 103 as mentioned above to perform the ME and MC. Herein, a total number of selected frames selected by the RFS unit 110 that are actually to be used by the ME and MC is designated M such that $M \leq M_i$.

The RFS unit 110 may have a video analysis unit 208 that generates data to be provided to a reference frame decision unit 210. The video analysis unit 208 may have a scene change detection unit (SCD) 212, or may receive and collect scene change data from an external SCD. Such scene change detection is well known and may be based on changes of image data values from frame to frame being over a threshold for one example technique. By one form, the SCD unit 212 then may provide before and after scene change location relative to a current frame being analyzed and in the video sequence. This may be provided as frame identification (ID) numbers or time stamps of the video sequence for example. This may be omitted when no scene change is closer to the current frame than the maximum available reference frame range Mi/2 on either side (past or future) of the current frame, or some other maximum range on each side when the two sides do not have the same number of available reference frames.

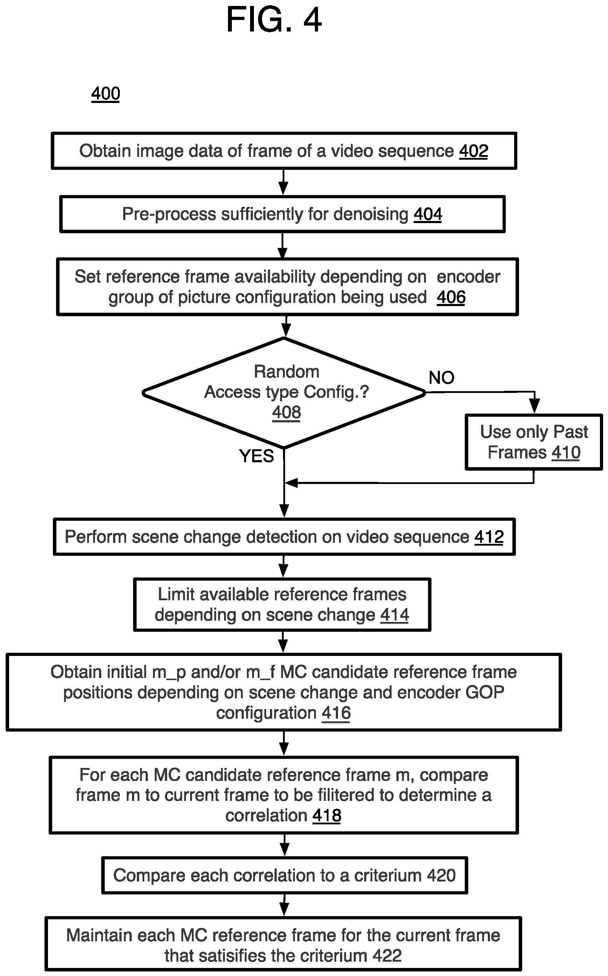

The video analysis unit 208 also may have a correlation unit 214 to determine the correlation (or distortion or similarity) between each available reference frame and the current frame. By one example, this may be performed as a pixel by pixel comparison as described with process 400 (FIG. 4) below. The correlation of each comparison of past reference frames p1 to pJ and future reference frames f1 to fK (where J + K = $M_i$) then may be provided to the reference frame decision unit 210.

The reference frame decision unit 210 receives the encoder or application parameters 216 as to the coding and rendering mode. Thus, if the mode is low delay, then only past frames are used as reference frames, and if the mode is random access, then both future and past reference frames can be used. Also, when the current frame is within J or K frames of a scene change, then those available reference frames forming the scene change, or have images for a different scene than the current frame, are dropped. Otherwise, the reference frame decision unit 210 compares the correlations to a threshold, and those available reference frames that satisfy the threshold are now considered to form a set of selected reference frames M for the current frame where all (or individual ones) of the selected reference frames are to be used to determine weights to filter the current frame.

By one form, the reference frame decision unit 210 indicates which particular available reference frames are each a selected reference frame. By another form, however, the reference frame decision unit 210 establishes the farthest or outer-most past and future reference frames (whichever are considered selected reference frames) from the current frame in the video sequence. Once these maximum outer reference frames are established, all of the frames closer to the current frame than those outer frames are considered selected MC reference frames, and by one form whether or not their correlation satisfied the thresholds. By one form, the correlation testing starts from the outer-most reference frames and moves inward, and the correlation testing stops once a reference frame passes the correlation testing. It is assumed any closer frame than a more-outer frame that satisfies the correlation threshold will also satisfy the threshold.

Thus, the reference frame decision unit 210 may provide or transmit a number of future reference frames m_f and past reference frames m_p extending from the current frame in video sequence order (or display order), and where m_f + m_p = M, and this is a selection for an entire frame. As another option, the RFS unit 110 may transmit frame positions in the video sequence when non-consecutive reference frames are selected.

Referring again to FIG. 1, the noise unit 114 uses the pre-processed image data to generate frequencies (or noise estimates or levels) freq_1 to freq_M by comparing the data of each motion compensated reference frame being used to the current frame and in a noise algorithm recited below, and by one form, block by block. The noise or frequency values are provided to the reference frame weight unit 116 and the block decay unit 124.

The block distortion unit 112 receives the past and future m_p and m_f (or other) signals or indicators from the RFS unit 110. The reference frame indicators and the current frames, and in turn current blocks, may be received in display order, or the block distortion unit 112 may access the current frames stored in a buffer for example, and then use the current frames, and obtain the reference frames, in display order. The block distortion unit 112 then obtains or receives the reference frames, or particularly MC reference blocks on the selected MC reference frames either for a whole current frame or for particular current block or blocks on the current frame, and where the reference frames were selected according to the past and future reference frame signals m_p and/or m_f. By another form, instead of providing the notifications from the RFS unit 110 to the filtering unit 126 as to MC reference frame selection, only the selected MC reference frames are placed in a specific MC ref buffer, and the distortion unit 112 retrieves only the m_p and/or m_f frames from the buffer. Thus, when a memory is involved, the reference frames M may simply be accessed in the memory to provide the frame and block image data to the distortion unit 112.

Once the distortion unit 12 receives a block of the current image and a MC reference block is obtained that is in the same block pattern and same block location, a block distortion E is computed by an algorithm described below (equation (6)) and to provide a single value for a block of pixels. By one form, sum of squared differences (SSD) and variance of the current block pixel data is used. Resulting block distortions dist_1 to dist_M are provided to the reference frame weight unit 116 and the block delay unit 124, and particularly to the distortion statistics unit 118 and the weight calculations unit 120. This includes both past and future reference frames when both are provided.

The distortion statistics unit 118 computes distortion statistics based on the distortions E (dist_1 to dist_M) for a single MC block location across the multiple selected MC reference frames. This is repeated for each block location on the frames. The distortion statistics unit 118 then may use the distortions dist_1 to dist_M to generate distortion statistics such as the distortion maximum, minimum, variance, and average per block and for the group of distortions 1 to M. Thus, the variance is a variance of distortions 1 to M, and the average is the average distortion E of all of the reference frames being used. Thus, if there are eight distortion Es, the distortion average is the average E among the eight reference frames. The distortion statistics unit 118 also may compute a distortion dispersion (DD) as distortion variance over distortion average. The statistics are then used by a weights calculation unit 120 by factoring the DD, distortion variance, and noise as well as encoder parameters such as a base or other quantization parameter (QP) of the encoder 108 and a number of other factors described below. This generates block weights 122 where by one form, all pixels in a block will have the same weight, and to be used in a final weight equation applied by the filtering applying unit 132.

The frequency or noise values from the noise unit 114 also may be used by the block decay unit 124 to compute a decay term that is an Euler's number e fractional exponent denominator term for the final weight equation. The decay also factors encoder parameters such as the QP.

The filtering unit 126 receives the initial or current frames (or accesses them from a buffer), and which may be in display order. The filtering unit 126 uses the current frame to compute a filtered frame to be provided to the encoder 108. Specifically, the filtering unit 126 may have the filter applying unit 132 obtain and insert both the decay term and the block weight into a final weight equation thereby factoring block distortion, distortion variance, dispersion distribution, and noise between references frames and a current frame. The final weight equation also factors a number of other constants such as a filter strengths for example, as well as the per pel differences between reference and current frames. A final weight generated from the final weight equation is then used in a filtering equation that generates filtered pixel image values. The filtered image is then provided to the encoder 108 for compression and transmission or storage. While not shown, the filtering unit 126 may use a reference frame buffer to hold MC reference frames as needed.

The encoder 108 may be any encoder as long as the filtering unit 104 can be arranged to be compatible with the encoder 108. The encoder may use any codec such as VVC, AV1, HEVC, AVC, VP9, and so forth with the appropriate reference software as mentioned above. The encoder 108 may provide coding and rendering modes alternatively or additionally to low delay and random access, and which may be incorporated into the methods disclosed herein. Thereafter, the encoder provides the compressed image data for transmission to a remote decoder.

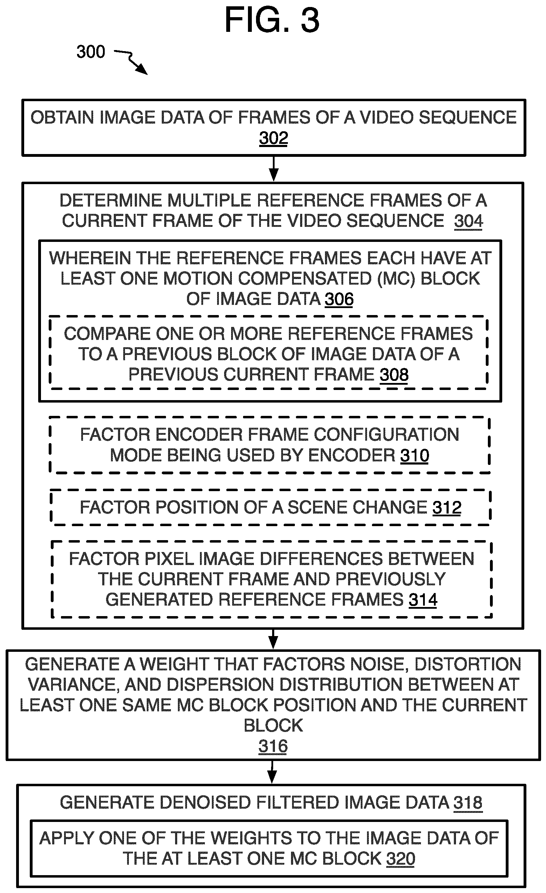

Referring to FIG. 3, an example process 300 of motion compensated temporal filtering for efficient video coding is arranged in accordance with at least some implementations of the present disclosure. In the illustrated implementation, process 300 may include one or more operations, functions or actions as illustrated by one or more of operations 302 to 320 numbered evenly. By way of non-limiting example, process 300 may be described herein with reference to example systems or devices 100, 600, 700, and/or 800 of FIGS. 1 and 6-8 respectively and as discussed herein.

Process 300 may include "obtain image data of frames of a video sequence" 302, and as described with video input 101 above. The video frames are not particularly limited to a certain format or parameter, such as resolutions, and may be initially pre-processed as described above sufficiently for the MCTF and encoding. The frames provide current frames that are to be filtered and are the original frames that are used to generate motion compensated (MC) frames to be used as reference frames for later current frames.

Process 300 may include "determine one or more reference frames of a current frame of the video sequence" 304. Particularly, operation 304 may include "wherein the reference frames each have at least one motion compensated (MC) block of image data" 306, and this may include "compare one or more reference frames to a previous block of image data of a previous current frame" 308. This operation first refers to the generation of the neighbor MC reference frames that were generated based on previous (in display order) current blocks of previous current frames, and in order to use the MC reference frames for reference frame selection and generating weights for a present current block of a present current frame to be temporally filtered. Thus, this operation involves motion estimation that may generate a motion vector from the MC block to a previous current block on a previous current frame, and motion compensation that may use the motion vectors and indicated MC reference blocks to eventually generate a new MC block of the present current block, and as described above.

By one form, this operation also includes further determining or selecting the reference frames depending on (or factoring): (1) an encoding parameter of an encoder to receive the denoised filtered image data, (2) a proximity of a scene change to the current frame, and (3) a correlation between image data on the current frame and image data on the MC reference frames.

More specifically, and by some examples, operation 304 may include "factor encoder frame configuration mode being used by encoder" 310, which refers to an encoding mode associated with a reference frame or GOP dependency structure of an encoder to receive the denoised filtered image data. Such modes may include low delay, which does not use future reference frames relative to a current frame being filtered, and random access, which uses both past and future reference frames relative to the current frame. By one form, an initial maximum number and/or position of frames that are available according to a certain codec may be set as available reference frames for the current frame. The encoder mode then may be used to indicate which of those available reference frames are selected for use with a current frame.

By another example, operation 304 may include "factor position of a scene change" 312, where it is determined whether or not the current frame is a scene change frame or is within an available number of consecutive reference frames to a scene start or end. Such scene change detection may be performed by algorithms that analyze luminance and chroma image data, such as comparing the image data to a past frame. Those neighbor frames that are not in the same scene as a current frame are not used as reference frames for the filtering of the current frame.

By yet another example, operation 304 may include "factor pixel image differences between the current frame and previously generated reference frames" 314. Here, a correlation or initial distortion or similarity may be computed, and this may be a sum of absolute difference (SAD) or other such distortion or correlation equation, and between the same pixel positions on the current and reference frame. Thus, by one form, those references that still can be used after the encoder mode and scene change considerations, then may each be tested by computing a correlation with the current frame. The reference frames may be MC reference frames that were already motion compensated by the reference frame generation (RFG) unit 103 for example. Those MC reference frames that satisfy a correlation criterium, such as by being less than a threshold, then may be used as reference frames for the current frame. While the example was explained in terms of the entire frame, it will be understood that such correlation computation could be performed block by block, such that each block in a single frame may have different MC reference frames instead.

Process 300 may include "generate a weight that factors noise, distortion variance, and dispersion distribution between the MC block and the current block" 316. Once selected MC reference frames (or reference blocks) are determined for a current block to be filtered, a distortion E is computed between each MC reference block and the current block so that a distortion E is generated for the same MC block position for each MC reference frame being used. By one form, and as mentioned above, distortion E is compute by using equation (6) below as one example and to provide a single value for a block of pixels. By one form, sum of squared differences (SSD) between current and reference block, and variance of the current block pixel data is used. The single distortions E (or dist_1 to dist_M) one each for M reference frames for the same block position then may be used to compute distortion statistics, such as minimum and maximum distortion, distortion variance, and distortion average of the distortion values E. A dispersion distribution (DD) then may be computed as distortion variance over distortion average.

The MCTF then may compute a weight $w_o$ (also referred to as an offset weight) based on, or depending on, an adjustment of the block distortion E by an offset computed by factoring the DD, distortion variance, and noise associated with the current block.

Predetermined distortion factors and noise factors for a weight equation are then selected depending on the values of the block distortion and the noise. The selected factors are used to compute a base weight (bw) and a sigma weight (sw). The base weight (bw) adjusts the offset weight ($w_o$) to generate a final weight for a weight portion of a final weight equation. The sw is used in a decay portion of the final weight equation. The weight equation also factors other constants, such as a filter strength based on the reference frame codec hierarchy for example, encoder parameters such as a base or other quantization parameter (QP) of the encoder being used, and the difference or distortion between the MC block and current block being analyzed. The final weight is then provided to be used in a filtering equation that generates filtered pixel values.

Particularly, process 300 may include "generate denoised filtered image data" 318, which may include "apply the weight to the image data of the MC block" 320. Here, a filtering equation uses the final weight to modify a pixel value or sample of an MC block, which is summed for all of the MC reference blocks being used for the current block, added to the current block, and then divided by the sum to obtain an average or normalized value as described below with equation (18). This generates a frame of filtered pixel values that is then provided to the encoder.

Referring to FIG. 4 for more detail, an example process 400 of motion compensated temporal filtering for efficient video coding is arranged in accordance with at least some implementations of the present disclosure, and particularly for reference frame selection. In the illustrated implementation, process 400 may include one or more operations, functions or actions as illustrated by one or more of operations 402 to 422 numbered evenly. By way of non-limiting example, process 400 may be described herein with reference to example systems or devices 100, 600, 700, and/or 800 of FIGS. 1 and 6-8 respectively and as discussed herein.

Process 400 may include "obtain image data of a frame of a video sequence" 402, and as mentioned above with process 300. The non-compressed input image data from the input video frames of the video sequence may be obtained from a memory with raw image data from one or more camera sensors, from other sources or memory, and so forth, or may be streaming image data for transcoding and obtained from a decoder. Many variations are possible.

Process 400 may include "pre-process sufficiently for denoising" 404, and this may include initial pre-processing sufficiently to perform the denoising (and filtering generally) and then encoding. This may include Bayer demosaicing of raw data, and other pre-processing techniques. Whether before denoising as part of the initial pre-processing or after the denoising and before encoding, other encoder pre-processing techniques may be applied such as image pixel linearization, shading compensation, resolution reduction, vignette elimination, image sharpening, and so forth.

Process 400 may include "set maximum amount of available reference frames" 404, and this refers to setting maximum initial reference frame amount $M_i$. As mentioned, amount $M_i$ may be based on a codec standard itself being used by the encoder and may already have been used by the reference frame generation unit 103. By one example, this may include 8 or 16 consecutive frames (also referred to as neighbor frames) in display order before and/or after a current frame to be filtered for a total of $M_i$ = 16 or 32 initially available reference frames.

Process 400 may include "set reference frame availability depending on encoder group of picture configuration being used" 406. Next then, an image processing application at the decoding device for example, and such as display or image data analysis applications as described above with FIG. 1, may provide a notification to the temporal filter as to which encoder (or coding) and rendering mode is being used. One example provides the option of a low delay mode where by one form, only past reference frames are used, and future reference frames are not used. Otherwise, a random access mode uses both past and future reference frames. The notification may simply provide a single bit (or few bits) for each option such that the modes are provided predetermined codes or flags, and that indicate which mode is being used, or alternatively and more particularly, which reference frames can be used to comply with the timing and access requirements of a particular mode. Thus by one possible approach, the temporal filter may have a listing of encoder mode codes, which may be part of a codec standard, corresponding to an indicator of which reference frames can be used.

Thus, process 400 may include the inquiry "random access type configuration?" 408. If not and the encode is using a low delay (LD) mode, process 400 may include "use only past frames" 410 as follows:

$$m\_p = M, \ m\_f = 0 \qquad\qquad (1)$$

as designated as explained above with FIG. 1. Here, there are no future frames for LD mode and a number of past frames, where $M \in M_i$.

If instead RA mode is the mode being used, then both past and future reference frames may be used. The process 400 then continues and may include "perform scene change detection on video sequence" 412, and no matter which encoder mode is being used. In this case, a scene change may be detected by algorithms mentioned above, and may be applied on a current frame by comparing it to the previous frame already analyzed. The comparison may be between the input image data before any denoising modifications, although initial pre-processing may have already occurred.

Process 400 may include "limit available reference frames depending on scene change" 414. When a current frame is found to be a scene change frame, the frames previous to the current frame cannot be used as reference frames since it may have little similarity to the current and subsequent frames after the current frame in display order. In this case, the SCD output sets the location of the current frame as a scene change in the video sequence in display order. Then, if encode mode is the RA mode, the reference frame selection (RFS) unit 110 can dynamically derive an amount and/or position m_p and m_f of the past and future reference frames in the video scene. For example, if a current frame is the start of a new scene, then

$$m\_p = 0, \ m\_f = M \q\qquad\qquad (2)$$

If instead a current frame is the end of a scene, then

$$m\_p = M, \ m\_f = 0 \qquad\qquad (3)$$

If a current frame is at a middle of a scene, then both past and future frames may be used as reference frames for the current frame. The result is that selected reference frames m_p and m_f so far may be set as:

$$m\_p + m\_f = M \qquad\qquad (4)$$

Process 400 may include "obtain initial m_p and/or m_f selected MC reference frame positions depending on scene change and encoder GOP configuration" 416, where the frame positions of the reference frames M that are still available are each obtained to determine a correlation of each of the frames to the current frame. First, it will be noted that the reference frames to be used for the filtering are previously motion compensated (MC) frames that was performed by the reference frame generation unit 103 already. Also as mentioned, while correlation here is discussed on a frame level, this may be performed on a block by block basis, such as 8x8, 16x16, or other size, shape, and pattern of blocks as desired so that different blocks can have different MC reference frames. Also, at this point the reference frame selection unit may obtain both MC reference frames from a buffer loaded by the reference frame generation unit and the input (or initial or original) frames in display order from an input buffer for example, and as described above.

Process 400 may include "for each selected MC reference frame m, compare frame m to current frame to be filtered to determine a correlation" 418. Where here, selected refers to those frames that are still a candidate to be selected. The correlation may be a SAD equation finding the difference pixel to pixel of the same pixel locations within the neighbor MC reference frame and current frame. The result is a single SAD value for a frame comparison or correlation (or for each correlation of blocks in the frame if performed on a block level). It should be noted that the comparison (or distortion or correlation) herein between a MC reference frame and a current frame, whether performed for an entire frame or on a block level, is to be between blocks with the same pixel locations (or other set locations when desired) on the frames. ME (with a motion vector block matching search) and MC is only applied to a current frame to generate an MC reference frame for subsequent current frames by the RFG unit 103. Thus, with the disclosed methods and systems herein, no block matching search between reference and current frames is necessary in order to perform reference frame selection for the current frame and weight computation for the current frame for temporal filtering according to the methods disclosed herein.

Process 400 may include "compare each correlation to a criterium" 420, where each correlation is compared to a threshold for example that is determined by experimentation. By one form, the threshold is a maximum correlation that can be used to obtain sufficiently accurate denoising to generate good quality images. By one form, the correlation threshold may be a SAD less than or equal to about 6% of a maximum pixel value in the block as an example.

Process 400 may include "maintain each MC reference frame for the current frame that satisfies the criterium" 422, where a set $M$ of the selected MC reference frames are maintained in memory or a buffer to be used for the filter computations as follows with process 500.

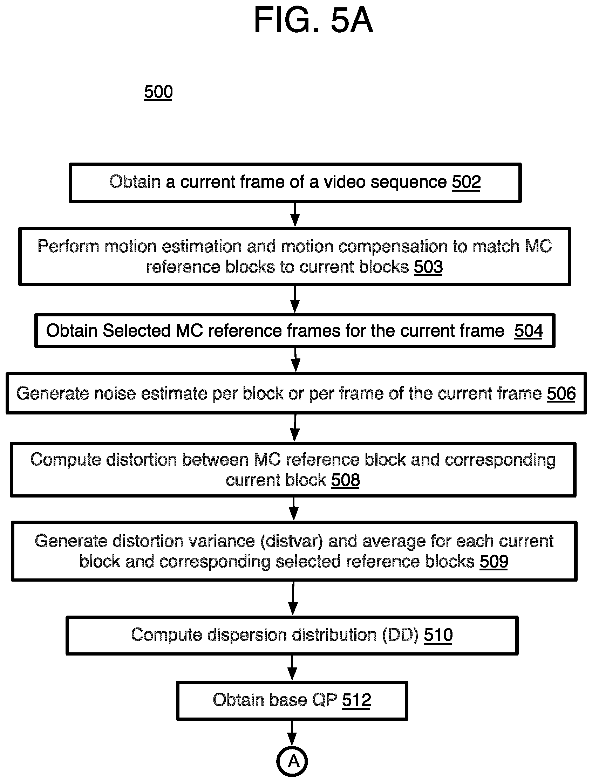

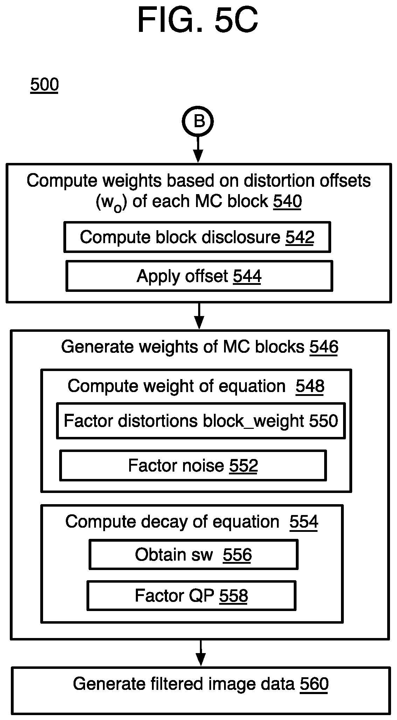

Referring to FIG. 5A-5C, an example process 500 of motion compensated temporal filtering for efficient video coding, and particularly for calculating MCTF weights, is arranged in accordance with at least some implementations of the present disclosure. In the illustrated implementation, process 500 may include one or more operations, functions or actions as illustrated by one or more of operations 502 to 560 numbered evenly. By way of non-limiting example, process 500 may be described herein with reference to example systems or devices 100, 600, 700, and/or 800 of FIGS. 1 and 6-8 respectively and as discussed herein.

Process 500 may include "obtain a current frame of a video sequence" 502, and as already described with processes 300 and 400. At this point, the current frames are being obtained or received in display order by a block distortion unit 112 as explained above for example. This operation also includes any initial pre-processing as described above.

Process 500 may include "perform motion estimation and motion compensation to match MC reference blocks to current blocks" 503. This refers to the generation of the MC references frames as described above and that are to be used to filter the current frame. Thus, as mentioned above, previous current frames to be filtered were used to generate the MC reference frames by applying ME to the previous current frames.

The ME involves performing a search and forming motion vectors (MVs) for matching previous current blocks to previous reference blocks. The MVs are provided to the MC unit. As mentioned, the motion estimation may use one or alternative multiple block patterns for the best block pattern (shape, size, and/or position on the frame) to be selected by the MC operations, and these blocks may be set without any consideration related to setting blocks for computing weights for filtering. The MC operations may compare each candidate MC reference block to the previous current block, and select the MC reference block with the least difference with the previous current block, such as by SAD or other difference computation, as well as other considerations when desired. The best reference block for the previous current block is selected to form the MC reference block for a new MC reference frame.

Process 500 may include "obtain selected MC reference frames for the current frame" 504, and this refers to obtaining the selected MC reference frames for computation of block distortions, noise, weight computation, and filtering. By one form, the number of past and future m_p and m_f MC reference frames are obtained from the reference frame selection (RFS) unit according to process 400 above, and the image data of the frames m_p and m_f are obtained from the RFG unit that performs the motion compensation. More precisely, the selected MC reference frames are accessed in a memory or buffer. By one form, either all of the available reference frames $M_i$ are provided to the block distortion unit and noise unit, and those units simply only use the selected MC reference frames M, or only the selected MC reference frames M are provided to those units. The MC reference frames may be provided to those units in display order.

This also may include obtaining an MC reference frame block by block where the reference frames and the current frame are divided into the same block pattern (same block sizes and positions) such as by 8x8 or 16x16 blocks. By one form, the blocks may or may not overlap as desired. By another form, the blocks have a size to fit evenly within frame dimensions so that no padding is needed. By one form, the blocks may be provided in raster order.

Process 500 may include "generate noise estimate per block or per frame of the current frame" 506. The reference frames also are obtained by the noise unit described above. The noise is computed as frequencies. For an example block frequency (or noise) calculation:

$$F = \frac{300 \cdot SSD + 50}{10 \cdot (HSD + VSD) + 50} \tag{5}$$

where HSD and VSD are the horizontal and vertical sum of squared differences, respectively, of every pair of two adjacent pixels in a difference (or just diff) block horizontally and vertically. The diff block here refers to a grid or surface of the pixel by pixel subtraction result between a current block and a motion compensated reference block. Thus, for example, the operation is as follows where (1) the pixel differences in a current block and MC reference block are determined to form a diff block with a difference in pixel image data value at each pixel or element location of the diff block. (2) Those pixel differences in adjacent pixel locations on the diff block are then subtracted horizontally and vertically. (3) Then, the horizontal or vertical differences are squared, and (4) the squared values are summed for each block comparison so each block comparison has a single HSD or VSD value. Separately the (SSD) for the whole block is determined as well. This is repeated for each correspond pairs of blocks on a current frame and MC reference frame, and then repeated for each MC reference frame being used. The F metric measures block frequency, where a small F values indicates a high noise level (indicates more noise) in the block, and a large F value indicates less noise in the block. Thus, the frequency F herein also may be considered noise, noise level, and/or noise estimate. Process 500 may include "compute distortion between MC reference block and corresponding current block" 508. Here, a block difference (or block distortion) is determined for each selected MC reference block and the current block being filtered. This may be computed as:

$$E = 20 \cdot \frac{SSD + 5}{V + 5} + \frac{SSD}{3200} \qquad (6)$$

where SSD is the sum of squared difference between the pixel values with the same pixel location in the block in the current frame and block in the motion compensated reference frame. A variance V of the pixel data in a current block may be used to normalize E. For a current block to be filtered, the result is an M number of E values, one from each reference frame of a current frame being used and determined by the reference frame selection (process 400 (FIG. 4)). These may be the dist_1 to dist_M values provided from the block distortion unit 112 for example.

The distortions E for each reference block of a same block location as the current block is then used to generate distortion statistics. Thus, process 500 may include "generate distortion variance (DistVar) and average (DistAvg) for each current block and corresponding selected reference blocks" 509. The distortion statistics for individual reference block positions are then generated by determining a maximum and minimum distortion among the block distortions E for a single block location, and then computing the variance and average for the group of block distortions E at the single block location, which is then repeated for each block location on a frame.

Process 500 may include "compute dispersion distribution (DD)" 510. To measure how the distortions are distributed, a DD metric is calculated in equation (7) below.

$$\text{Dispersion Distribution} = (\text{distVar} + 1)/(\text{distAvg} + 1) \qquad (7)$$

The DD is better than considering the distortion variance or average alone in order to normalize the variance. Specifically, since variance describes the variation from the average, here, the larger average values permit larger variation. So the metric DD can be used to normalize variance by the average.

Process 500 also may include "obtain base QP" 512, and from the encoder being used. The quantization parameter (QP) used during encoding may be used to set a filter strength for denoising. The higher the QP (to obtain a lower bitrate), the lower the quality of the image that is expected. In this case, here then, the stronger (with higher values) the filter weights can be set to remove a greater amount of noise from the image. Thus, at least a base QP, if not an actual QP being used in real time, may be used. For example, a weight $w_o$ based on the block distortion E described herein is modified by an offset applied to E. The QP may be used to determine the offset. Also, the QP may be used directly in a decay term in a final weight equation. Both of these are described in greater detail below.

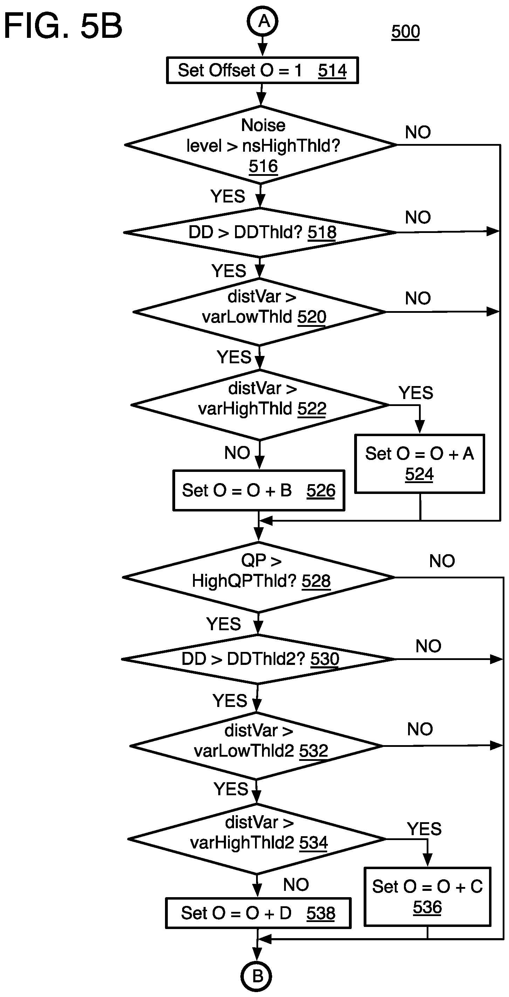

Referring to FIG. 5B, weights for each reference frame may be computed on a block basis and based on a block-level distortion value of the current reference block (or in other words, the block distortion E), as well as the statistics of the pixel distortions, noise level, and encode parameters.

Specifically, offset weights $w_o$ (or weights based on offsets applied to the block distortion) are generated to subsequently determine a final block weight for an MC reference block compared to a current block. The algorithm of an offset weight may be as:

$$w_o = weight = \frac{\min(E) + offset}{E + offset} \qquad (8)$$

where E is the block distortion of a reference block of a reference frame, or in other words, a measure of block errors after motion compensation as in example equation (6) above. The term min(E) is the minimum block distortion among all reference frames for the same block position. Offset is a value calculated with an algorithm which is adaptive to noise level, encode QP, and distortion statistics including the distortion variance and the dispersion distribution (DD), as shown on FIG. 5B and described below. Thus, for at least these reasons, offset weight $w_o$ factors these statistics to modify E and in turn are therefore factors for the base_weight bw, and final weights $W_{bw}$ and in turn $W_r(i,a)$ described below.

By one form, the offset may be based on the block-level statistics described above. The algorithm to derive "offset" for reference frame weighting may be determined by using the following operations.

Process 500 may include "set offset O = 1" 514 as an initialization.

Process 500 may include the inquiry "noise level > nsHighThld?" 516, where the noise level computed as F (eq. 5) for a current block is compared to a high or maximum noise threshold nsHighThld, determined by experimentation. By one form, the nsHighThld is 25 for one example.

If no and the noise is below the nsHighThld threshold, the block may be very clean with very low noise, such that increase above an offset of one may not be needed. In this case, the process jumps to operation 528.

If yes and the noise is above the nsHighThld threshold such that the block is relatively noisy, increase of the offset may be desired. In this case, the process proceeds to operation 518 to check dispersion distribution.

Process 500 may include the inquiry "DD > DDThld?" 518 to check the dispersion distribution. By one form, DDThld is set at 0.5 for example. The DDThld threshold also may be determined by experimentation.

If no when the DD metric value is smaller than the DDThld threshold, the distortion values in a block may be converged. This can happen when motion vectors of multiple (or all) reference frames are sufficiently accurate and video content is sufficiently clean with little noise (even though the block is noisy enough to be higher than the noise threshold nsHighThld). In this case, an offset may be kept at the minimal value one for all reference blocks so that blocks having block distortion E larger than min(E) will have weights as small as possible, and hence reference frames or blocks will have smaller weights in temporal filtering. In this case, the process also jumps to operation 528 here.

If yes when the DD metric value is larger than the threshold DDthld, the distortion values have a wide spread from a mean. In this case, and for content with a high noise level, to effectively reduce noise and improve encoder quality, an offset much larger than 1 is expected so that reference blocks having block distortion E larger than a min(E) (equation (7) above) will have larger weights. The process 500 then moves to operations 520 and 522 to check variance first before adjusting the offset.

First, low block distortion variance is checked at operation 520. Thus, process 500 may include the inquiry "distvar > varLowThld?" 520. By one form, varLowThld is set at 2 for one example. The varLowThld threshold also may be determined by experimentation.

If no when distortion variance is very small, which refers to when distortion variances have a very small difference from an average distortion, the offset may be kept at the minimal value such as one by one example, to better ensure avoidance of errors during weighted averaging in temporal filtering. In this case, the process continues with operation 528.

If yes when the distortion variance distVar is not below the low threshold, then the high threshold is checked. Thus, process 500 may include the inquiry "distvar > varHighThld?" 522. If yes and distvar is larger than the varHighThld threshold, then the variance is considered to be extremely high and the process proceeds with operation 524 to apply a large increment of the offset upward, and which may be the largest increment. If not, the process proceeds with operation 526 to provide a relatively smaller increment of the offset upward.

Specifically, process 500 may include "set O = O + A" 524, and "set O = O + B" 526, where offset increment A may be set for the largest offset increment increase, which may be determined by experimentation, and may be set relative to the other increments B, C and D in operation 526, 536, and 538, respectively. Increment A may or may not be larger than increment B to adjust block distortion between the MC reference block and current block and in turn the resulting weight $w_o$. In this case, the above statistics show high noise, dispersion distribution, and variance. Increment B may provide the offset increment when noise and DD are high, but variance is not extremely high. By one example, A may be set to 10 and B may be set to 20. Determining any of the offset increments A, B, C, and/or D may involve experimentation.

Whether or not the offset has already been adjusted, the process proceeds to operation 528 to consider encoder parameters and then recheck DD and variance thresholds for smaller offset increment increases than that provided by increments A and B to provide very precise offset values, but could be the same or in a different order of magnitude.

Process 500 may include the inquiry "QP > HighQPThld?" 528, which factors an encoder setting or parameter, and specifically quantization parameter (QP) that sets the precision of encoder quantization. Larger QP refers to greater quantization and compression (to lower actual bitrate) but also lowers image quality. For content with any noise level, when the encoder QP is considered large, a stronger temporal filtering should be used to provide as much encode gain as possible. Thus, a larger offset should be generated to increase the magnitude of the weights. An example value of HighQPThld may be 32.

If the inquiry answer is no and QP is less than the threshold HighQPThld, then no further adjustment of the offset may be needed. In this case, the process proceeds to apply the offset (operation 540). Thus, if no adjustments were made to the offset, the offset remains at one as initialized. If there was a previous adjustment by operation 524 or 526 to add a relatively large offset due to high noise, large distortion variance, and/or large DD, then that large offset remains and no further smaller high-precision offset increment is applied for the QP.

If yes and QP is larger than threshold HighQPThld, as mentioned initially regardless of the noise or distortion statistics, then it is determined whether further offset increments C or D (operations 536 or 538) are needed. Thus, process 500 first may include the inquiry "DD > DDThld2?" 530. By one example, DDThld2 may be the same or smaller than DDThld, and here may be set at 0.5, and determined by experimentation as with DDThld above. Otherwise, operation proceeds similarly to the DD check at operation 518, where no further offset increment is made when the DD is less than the threshold DDThld2, but the process proceeds to check the distortion variance if DD is larger than threshold DDThld2.

Process 500 may include the inquiry "distVar > varLowThld?" 532 and "distvar > varHighThld?" 534, where if the distortion variation is less than low threshold distVarThld2, then no further offset increment is needed, and the process continues with operation 540. If the distVar is greater than the low threshold varLowThld2, then the high threshold is checked. Then, if the distVar is greater than the high threshold varHighThld2, then the offset increment at operation 536 applies where process 500 may include "set O = O + C" 536. Otherwise, when the distVar is smaller than the high threshold varHighThld2, then the offset increment at operation 538 applies where process 500 may include "set O = O + D" 538. By one example form, offset increment C may be 10 and offset increment D may be 20, which is the same as A and B. In other cases, the offset increments A to D may be from largest offset increment to smallest offset increment, although many other configurations or arrangements may be used instead depending on the testing parameters, and so forth.

To compute the weights, process 500 may include "compute weights ($w_o$) based on distortion offsets of each MC block" 540, and this refers to equation (8) repeated here:

$$w_o = weight = \frac{\min(E) + offset}{E + offset} \qquad (8)$$

The weight $w_o$ is referred to as the weight factoring the offsets or simply offset weight merely to distinguish this weight from other weights mentioned herein. This includes operation 540 which may include "compute block distortion" 542. For an example block distortion E calculation see equation (6) above.

Process 500 may include "apply offset" 544, where the offset from operations 514-538 is applied in equation (8) to adjust E. By the example form herein, the offset may be equal to or greater than 1, where 1 indicates less distortion and noise, resulting in a smaller offset weight $w_o$. A greater offset indicates greater noise and/or distortion where weight $w_o$ is to be greater to have more gain and remove more noise. In other words, a smaller offset provides the reference block with distortion = E comparatively smaller weights, while a larger offset provides the reference block comparatively larger weights. Here, small or large weights are inside (or each associated with) the reference blocks of a current block.

Process 500 may include "generate weights of MC blocks" 546, and this operation 546 may include "compute weight of equation" 548. Specifically, a final weight equation (9) recited below has a weight portion and a decay portion. The weight portion has an adjusted weight $W_{bw}$ modified by a number of constants s, and the decay portion is the denominator of the fractional exponent of the Euler's number e. As shown in equation 10, the adjusted weight $W_{bw}$ is the offset weight $w_o$ (equation (8) above) modified by a base_weight (bw). The decay term or portion factors QP and as sigma weight ($sw$). The variables bw and sw are generated by using block distortion E and block frequency (noise) F to look up predetermined weight factors that establish bw and sw in the equations 12-17 below. The details are as follows.

$$W_r(i,a) = W_{bw} \cdot s_l \cdot s_o \cdot s_r(i,a) \cdot e^{-\left(\frac{\Delta I(i)^2}{2 \cdot sw \cdot \sigma_l(QP)^2}\right)} \qquad (9)$$

where:

$$W_{bw} = w_o \times bw \qquad (10)$$

where the term $\Delta I(i)^2$ is obtained by:

$$\Delta I(i) = (I_r(i) - I_o) * (1024/2^b) \qquad (11)$$

where the variable i is the frame distance from the MC reference block to the frame of the current block, the variable $a$ is the number of selected reference frames being used, the variable $b$ is bit depth being used, $I_o$ is an original or current frame pixel value, $I_r()$ is a motion compensated pixel (or sample) value from an MC reference block. Also, the constant $s_l$ is a filter strength for luma or luminance channels that alternatively can be $s_c$ for chroma channels and where by one example, $s_l$ is 0.4, and $s_c$ is 0.55, the constant $s_o$ may factor a filter strength depending on whether RA, LD, or another encoder and rendering mode is being used and the hierarchy level of the current frame in an encoder group of pictures, and $s_r()$ is a filter strength adjusted for the number of selected MC reference frames being used for a current block. These constants may be determined depending on which layer a current frame to be filtered is located and experimentation.

Now to compute bw and sw, both $bw$ and $sw$ may be initialized to 1.0, then:

$$bw = bw * m\_bwDistFactor * m\_bwNoiseFactor \qquad (12)$$

$$sw = sw * m\_swDistFactor * m\_swNoiseFactor \qquad (13)$$

Operation 548 may include "factor distortions block_weight" 550, where m_bwDistFactor is a predetermined fixed distortion weight factor value based on a comparison of block distortion E with distortion thresholds. For example:

$$E = \begin{cases} < 50, & \text{m\_bwDistFactor} = 1.2 \\ [50,100], & \text{m\_bwDistFactor} = 1.0 \\ > 100, & \text{m\_bwDistFactor} = 0.6 \end{cases} \qquad (14)$$

and where m_swDistFactor is a predetermined fixed distortion weight factor value based on a comparison of E with other distortion thresholds. For example:

$$E = \begin{cases} < 50, & \text{m\_swDistFactor} = 1.0 \\ \geq 50, & \text{m\_swDistFactor} = 0.8 \end{cases} \qquad (15)$$

Operation 548 also may include "factor noise" 552, where m_bwNoiseFactor is a predetermined fixed noise weight factor value based on a comparison of F with other distortion thresholds. For example:

$$F = \begin{cases} < 25, & \text{m\_bwNoiseFactor} = 1.0 \\ \geq 25, & \text{m\_bwNoiseFactor} = 0.6 \end{cases} \qquad (16)$$

and where m_swNoiseFactor is a predetermined fixed noise weight factor value based on a comparison of F with other distortion thresholds. For example:

$$F = \begin{cases} < 25, & \text{m\_swNoiseFactor} = 1.0 \\ \geq 25, & \text{m\_swNoiseFactor} = 0.8 \end{cases} \qquad (17)$$

Once the factors in equations (15) to (17) are established, the base band and sigma weights bw and sw can be generated and sw is ready for input to final weight equation (9) and *bw* is ready for input to equation (10). This may be accomplished by computing *sw* and *bw* in equations (13) and (14), as mentioned above.

Operation 546 may include "compute decay of equation" 554, and which may include "obtain sw" 556 as described above, and "factor QP" 558. Thus, by one example equation:

$$\sigma(QP) = 3 \, (QP - 10) \qquad (18)$$

where QP is factored here as well in addition to the block distortion offset. Equation (18) is used in order to adjust QP in order to weaken filtering with QP is low and strengthen filtering when WP is high.

Process 500 then may include "generate filtered image data" 560. This is one example formula for temporal filtering used herein:

$$I_n = \frac{I_o + \sum_{i=-mp}^{mf} w_r(i,a) * I_r(i)}{1 + \sum_{i=-mp}^{mf} w_r(i,a)} , M = mf + mp \qquad (19)$$

where $I_n$ is a filtered pixel value, *mp* and *mf* are *m_p* and *m_f*, respectively, and the other variables are as described above.

The resulting filtered values then may be placed onto a filtered frame version of the current frame, and the filtered frame is then provided to the encoder. By one form, no other pre-processing (after the MCTF filtering) may be necessary although those mentioned above may be used, and the denoised filtered frame may be provided directly to the encoder without further denoising or other image data value modifications related to image quality.

The resulting filtered values then may be placed onto a filtered frame version of the current frame, and the filtered frame is then provided to the encoder. By one form, no other preprocessing (after the MCTF filtering) may be necessary although those mentioned above may be used, and the denoised filtered frame may be provided directly to the encoder without further denoising or other image data value modifications related to image quality when desired.

RESULTS OF EXPERIMENTS

To demonstrate encoder efficiency, an experiment was performed to measure encoder quality gains with the of the disclosed MCTF method and system. MCTF as described above were operated with a VVC encoder having GOP16 format with a constant quantization parameter (CQP), and while using random access B. The testing dataset had 83 clips with various types of content, including natural content (Class A to E), video games (Class V), and screen content (Class F, G) which refers to text or work production screens (word processors, spread sheets, slide presentations, web browsers, and so forth). Various resolutions were tested as well including 4K (Class A), 1080p (Class B), 720p (Class E), Wide Video Graphics Array (WVGA) (Class C), and Wide Quarter VGA (WQVGA) (Class D). Content with varying noise levels were tested including high noise level content (Class H, I), and clean content (Class F, G, V). Other variations in content included high motion, video conferences, rich texture content, and so forth.

Two tests were run including a comparison or control (or anchor) VVC encode with the above testing configurations and without MCTF, and a VVC encode with the same testing configurations but with the disclosed MCTF method and system described above and as a preprocessing operation before the encoder. M = 8 reference frames were used.

A peak signal-to-noise ratio (PSNR) was computed based on Bjontegaard delta rates (BD-Rates) for the control or anchor test without MCTF and a test with the disclosed method and system. Table 1 below shows the resulting BD-rate gains where good quality gains were achieved with the disclosed MCTF method and system. Among all content types, natural content had the highest gain, up to a 10+% gain in BD-Rate for Class B. Game content in Class V also shows a 3.0+% gain. Quality gain on clean screen content (Class F and G) and very small resolution WQVGA content (Class D) is comparatively low which is expected.

TABLE 1

| BD Rate | Y | U | V | YUV |
| --- | --- | --- | --- | --- |
| Class A | -5.1% | -5.7% | -6.1% | -5.3% |
| Class B | -9.9% | -11.8% | -10.6% | -10.1% |
| Class C | -2.7% | -4.1% | -4.3% | -3.0% |
| Class D | -1.7% | -3.2% | -3.2% | -2.0% |
| Class E | -9.1% | -9.1% | -9.1% | -9.2% |
| Class F | -1.0% | -1.0% | -1.5% | -1.1% |
| Class G | -0.4% | 0.0% | 0.4% | -0.3% |
| Class H | -6.6% | -5.3% | -6.7% | -6.6% |
| Class I | -6.9% | -9.8% | -12.3% | -7.6% |
| Class V | -3.1% | -3.9% | -4.0% | -3.3% |
| All | -5.5% | -5.9% | -6.3% | -5.6% |
| All (A/B/E/H) | -7.7% | -7.7% | -8.1% | -7.8% |

While implementation of the example process 300, 400, and 500 discussed herein may include the undertaking of all operations shown in the order illustrated, the present disclosure is not limited in this regard and, in various examples, implementation of the example processes herein may include only a subset of the operations shown, operations performed in a different order than illustrated, or additional or less operations.

In addition, any one or more of the operations discussed herein may be undertaken in response to instructions provided by one or more computer program products. Such program products may include signal bearing media providing instructions that, when executed by, for example, a processor, may provide the functionality described herein. The computer program products may be provided in any form of one or more machine-readable media. Thus, for example, a processor including one or more graphics processing unit(s) or processor core(s) may undertake one or more of the blocks of the example processes herein in response to program code and/or instructions or instruction sets conveyed to the processor by one or more machine-readable media. In general, a machine-readable medium may convey software in the form of program code and/or instructions or instruction sets that may cause any of the devices and/or systems described herein to implement at least portions of the operations discussed herein and/or any portions the devices, systems, or any module or component as discussed herein.

As used in any implementation described herein, the term "module" refers to any combination of software logic, firmware logic, hardware logic, and/or circuitry configured to provide the functionality described herein. The software may be embodied as a software package, code and/or instruction set or instructions, and "hardware", as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. The modules may, collectively or individually, be embodied as circuitry that forms part of a larger system, for example, an integrated circuit (IC), system on-chip (SoC), and so forth.

As used in any implementation described herein, the term "logic unit" refers to any combination of firmware logic and/or hardware logic configured to provide the functionality described herein. The "hardware", as used in any implementation described herein, may include, for example, singly or in any combination, hardwired circuitry, programmable circuitry, state machine circuitry, and/or firmware that stores instructions executed by programmable circuitry. The logic units may, collectively or individually, be embodied as circuitry that forms part of a larger system, for example, an integrated circuit (IC), system on-chip (SoC), and so forth. For example, a logic unit may be embodied in logic circuitry for the implementation firmware or hardware of the coding systems discussed herein. One of ordinary skill in the art will appreciate that operations performed by hardware and/or firmware may alternatively be implemented via software, which may be embodied as a software package, code and/or instruction set or instructions, and also appreciate that logic unit may also utilize a portion of software to implement its functionality.

As used in any implementation described herein, the term "component" may refer to a module or to a logic unit, as these terms are described above. Accordingly, the term "component" may refer to any combination of software logic, firmware logic, and/or hardware logic configured to provide the functionality described herein. For example, one of ordinary skill in the art will appreciate that operations performed by hardware and/or firmware may alternatively be implemented via a software module, which may be embodied as a software package, code and/or instruction set, and also appreciate that a logic unit may also utilize a portion of software to implement its functionality.

The terms "circuit" or "circuitry," as used in any implementation herein, may comprise or form, for example, singly or in any combination, hardwired circuitry, programmable circuitry such as computer processors comprising one or more individual instruction processing cores, state machine circuitry, and/or firmware that stores instructions executed by programmable circuitry. The circuitry may include a processor ("processor circuitry") and/or controller configured to execute one or more instructions to perform one or more operations described herein. The instructions may be embodied as, for example, an application, software, firmware, etc. configured to cause the circuitry to perform any of the aforementioned operations. Software may be embodied as a software package, code, instructions, instruction sets and/or data recorded on a computer-readable storage device. Software may be embodied or implemented to include any number of processes, and processes, in turn, may be embodied or implemented to include any number of threads, etc., in a hierarchical fashion. Firmware may be embodied as code, instructions or instruction sets and/or data that are hard-coded (e.g., nonvolatile) in memory devices. The circuitry may, collectively or individually, be embodied as circuitry that forms part of a larger system, for example, an integrated circuit (IC), an application-specific integrated circuit (ASIC), a system-on-a-chip (SoC), desktop computers, laptop computers, tablet computers, servers, smartphones, etc. Other implementations may be implemented as software executed by a programmable control device. In such cases, the terms "circuit" or "circuitry" are intended to include a combination of software and hardware such as a programmable control device or a processor capable of executing the software.

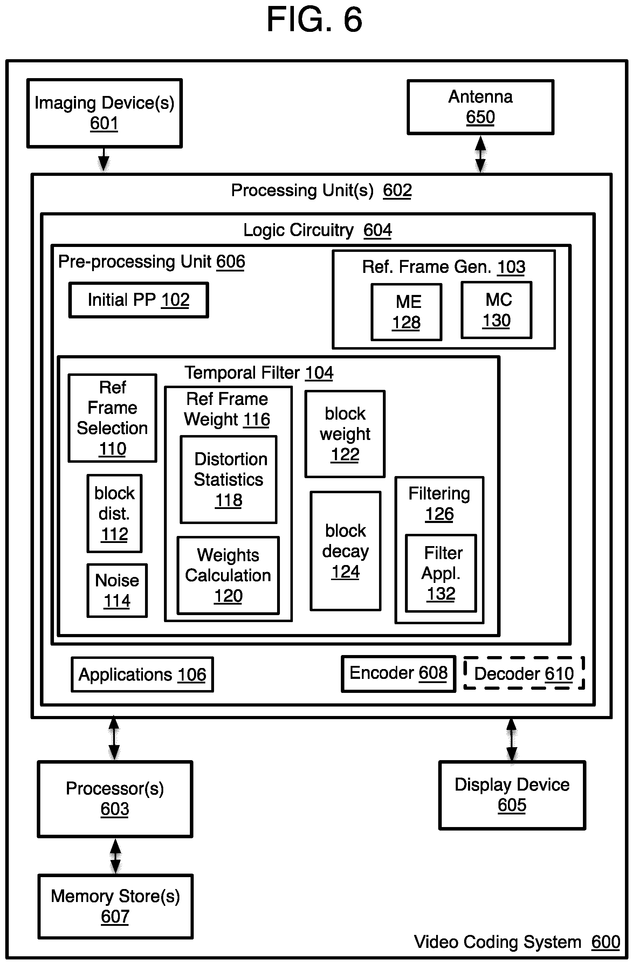

Referring to FIG. 6, an example video coding system 600 for providing MCTF denoising for video coding may be arranged in accordance with at least some implementations of the present disclosure. In the illustrated implementation, system 600 may include imaging device(s) 601 such as one or more cameras, one or more central and/or graphics processing units or processors 603, a display device 605, one or more memory stores 607, an antenna 650 for wireless transmission, and processing unit(s) 602 to perform the operations mentioned above. Processor(s) 603, memory store 607, and/or display device 605 may be capable of communication with one another, via, for example, a bus, wires, or other access. In various implementations, display device 605 may be integrated in system 600 or implemented separately or remotely from system 600.

As shown in FIG. 6, the processing unit(s) 602 may have logic circuitry 604 with a preprocessing (PP) unit 606 and either a video encoder unit 608 alone or with a video decoder unit 610. The pre-processing unit 606 may receive image data for encoding and may have the initial preprocessing (PP) unit 102, the reference frame unit 103 with the ME unit 128 and MC unit 130, and the temporal filter unit 104 in system 100 (FIG. 1). The temporal filter unit 104 may perform denoising and may have the reference frame selection unit 110, the block distortion unit 112, the noise unit 114, and the reference frame weight unit 116. The reference frame weight unit 116 may have the distortion statistics unit 118 and the weights calculation unit 120. The temporal filter 104 may generate the block weights 122 and may have a block decay unit 124. The temporal filter also may have a filtering unit 126 with a filter applying unit 132. Other pre-processing units may be provided as well. All of these units, logic, and/or modules perform at least the tasks as mentioned above and as the name of the unit implies, but may perform additional tasks as well.

As will be appreciated, the modules illustrated in FIG. 6 may include a variety of software and/or hardware modules, and/or modules that may be implemented via software, firmware, or hardware or combinations thereof. For example, the modules may be implemented as software via processing units 602 or the modules may be implemented via a dedicated hardware portion. Furthermore, the shown memory stores 607 may be shared memory for processing units 602, for example, storing or buffering any pre-processing and denoising data, whether stored on any of the optional buffers mentioned above, or any memory mentioned herein. Also, system 600 may be implemented in a variety of ways. For example, system 600 (excluding display device 605) may be implemented as a single chip or device having a graphics processor unit (GPU), an image signal processor (ISP), a quad-core central processing unit, and/or a memory controller input/output (I/O) module. In other examples, system 600 (again excluding display device 605) may be implemented as a chipset or as a system on a chip (SoC).

Processor(s) 603 (or processor circuitry forming the processor(s)) may include any suitable implementation including, for example, microprocessor(s), multicore processors, application specific integrated circuits, chip(s), chipsets, programmable logic devices, graphics cards, integrated graphics, general purpose graphics processing unit(s), or the like. In addition, memory stores 607 may be any type of memory such as volatile memory (e.g., Static Random Access Memory (SRAM), Dynamic Random Access Memory (DRAM), etc.) or non-volatile memory (e.g., flash memory, etc.), and so forth. In a non-limiting example, memory stores 607 also may be implemented via cache memory.

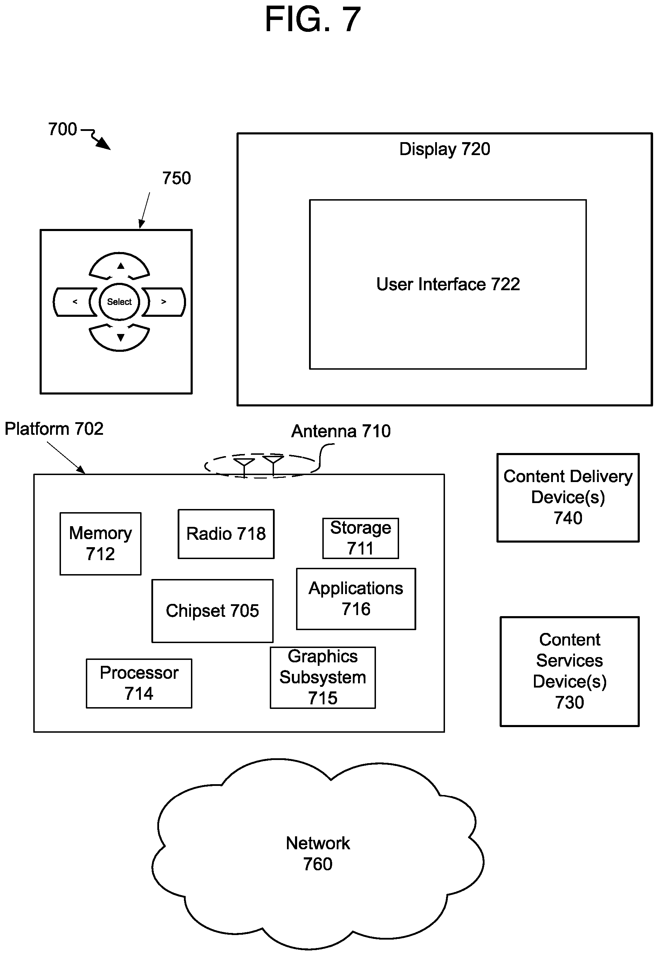

Referring to FIG. 7, an example system 700 in accordance with the present disclosure and various implementations, may be a media system although system 700 is not limited to this context. For example, system 700 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

In various implementations, system 700 includes a platform 702 communicatively coupled to a display 720. Platform 702 may receive content from a content device such as content services device(s) 730 or content delivery device(s) 740 or other similar content sources. A navigation controller 750 including one or more navigation features may be used to interact with, for example, platform 702 and/or display 720. Each of these components is described in greater detail below.

In various implementations, platform 702 may include any combination of a chipset 705, antenna 710, memory 712, storage 711, graphics subsystem 715, applications 716 and/or radio 718 as well as antenna(s) 710. Chipset 705 may provide intercommunication among processor 714, memory 712, storage 711, graphics subsystem 715, applications 716 and/or radio 718. For example, chipset 705 may include a storage adapter (not depicted) capable of providing intercommunication with storage 711.

Processor 714 may be implemented as a Complex Instruction Set Computer (CISC) or Reduced Instruction Set Computer (RISC) processors; x86 instruction set compatible processors, multi-core, or any other microprocessor or central processing unit (CPU). In various implementations, processor 714 may be dual-core processor(s), dual-core mobile processor(s), and so forth.

Memory 712 may be implemented as a volatile memory device such as, but not limited to, a Random Access Memory (RAM), Dynamic Random Access Memory (DRAM), or Static RAM (SRAM).

Storage 711 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In various implementations, storage 711 may include technology to increase the storage performance enhanced protection for valuable digital media when multiple hard drives are included, for example.

Graphics subsystem 715 may perform processing of images such as still or video for display. Graphics subsystem 715 may be a graphics processing unit (GPU) or a visual processing unit (VPU), for example. An analog or digital interface may be used to communicatively couple graphics subsystem 715 and display 720. For example, the interface may be any of a High-Definition Multimedia Interface, Display Port, wireless HDMI, and/or wireless HD compliant techniques. Graphics subsystem 715 may be integrated into processor 714 or chipset 705. In some implementations, graphics subsystem 715 may be a stand-alone card communicatively coupled to chipset 705.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In other implementations, the functions may be implemented in a consumer electronics device.

Radio 718 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 718 may operate in accordance with one or more applicable standards in any version.

In various implementations, display 720 may include any television type monitor or display. Display 720 may include, for example, a computer display screen, touch screen display, video monitor, television-like device, and/or a television. Display 720 may be digital and/or analog. In various implementations, display 720 may be a holographic display. Also, display 720 may be a transparent surface that may receive a visual projection. Such projections may convey various forms of information, images, and/or objects. For example, such projections may be a visual overlay for a mobile augmented reality (MAR) application. Under the control of one or more software applications 716, platform 702 may display user interface 722 on display 720.

In various implementations, content services device(s) 730 may be hosted by any national, international and/or independent service and thus accessible to platform 702 via the Internet, for example. Content services device(s) 730 may be coupled to platform 702 and/or to display 720. Platform 702 and/or content services device(s) 730 may be coupled to a network 760 to communicate (e.g., send and/or receive) media information to and from network 760. Content delivery device(s) 740 also may be coupled to platform 702 and/or to display 720.

In various implementations, content services device(s) 730 may include a cable television box, personal computer, network, telephone, Internet enabled devices or appliance capable of delivering digital information and/or content, and any other similar device capable of unidirectionally or bidirectionally communicating content between content providers and platform 702 and/display 720, via network 760 or directly. It will be appreciated that the content may be communicated unidirectionally and/or bidirectionally to and from any one of the components in system 700 and a content provider via network 760. Examples of content may include any media information including, for example, video, music, medical and gaming information, and so forth.

Content services device(s) 730 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 702 may receive control signals from navigation controller 750 having one or more navigation features. The navigation features of controller 750 may be used to interact with user interface 722, for example. In implementations, navigation controller 750 may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of controller 750 may be replicated on a display (e.g., display 720) by movements of a pointer, cursor, focus ring, or other visual indicators displayed on the display. For example, under the control of software applications 716, the navigation features located on navigation controller 750 may be mapped to virtual navigation features displayed on user interface 722, for example. In implementations, controller 750 may not be a separate component but may be integrated into platform 702 and/or display 720. The present disclosure, however, is not limited to the elements or in the context shown or described herein.

In various implementations, drivers (not shown) may include technology to enable users to instantly turn on and off platform 702 like a television with the touch of a button after initial boot-up, when enabled, for example. Program logic may allow platform 702 to stream content to media adaptors or other content services device(s) 730 or content delivery device(s) 740 even when the platform is turned "off." In addition, chipset 705 may include hardware and/or software support for 7.1 surround sound audio and/or high definition (7.1) surround sound audio, for example. Drivers may include a graphics driver for integrated graphics platforms. In implementations, the graphics driver may comprise a peripheral component interconnect (PCI) Express graphics card.

In various implementations, any one or more of the components shown in system 700 may be integrated. For example, platform 702 and content services device(s) 730 may be integrated, or platform 702 and content delivery device(s) 740 may be integrated, or platform 702, content services device(s) 730, and content delivery device(s) 740 may be integrated, for example. In various implementations, platform 702 and display 720 may be an integrated unit. Display 720 and content service device(s) 730 may be integrated, or display 720 and content delivery device(s) 740 may be integrated, for example. These examples are not meant to limit the present disclosure.

In various implementations, system 700 may be implemented as a wireless system, a wired system, or a combination of both. When implemented as a wireless system, system 700 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 700 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 702 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The implementations, however, are not limited to the elements or in the context shown or described in FIG. 7.

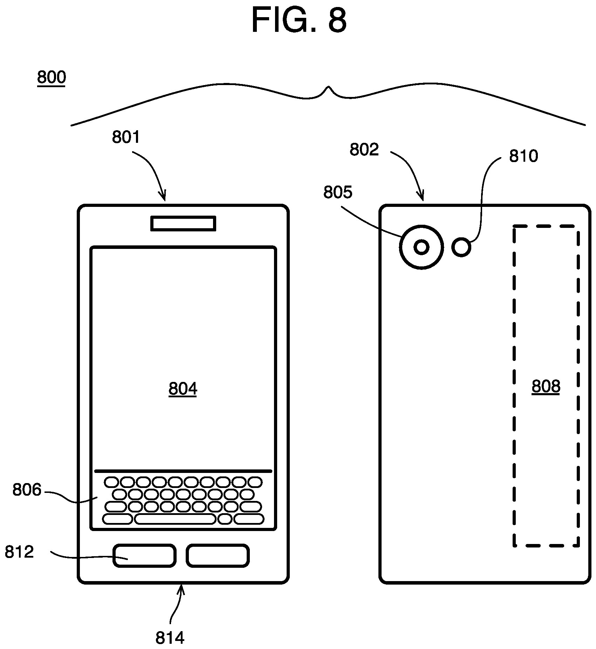

Referring to FIG. 8, a small form factor device 800 is one example of the varying physical styles or form factors in which systems 600 or 700 may be embodied. By this approach, device 800 may be implemented as a mobile computing device having wireless capabilities. A mobile computing device may refer to any device having a processing system and a mobile power source or supply, such as one or more batteries, for example.

As described above, examples of a mobile computing device may include a digital still camera, digital video camera, mobile devices with camera or video functions such as imaging phones, webcam, personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In various implementations, for example, a mobile computing device may be implemented as a smart phone capable of executing computer applications, as well as voice communications and/or data communications. Although some implementations may be described with a mobile computing device implemented as a smart phone by way of example, it may be appreciated that other implementations may be implemented using other wireless mobile computing devices as well. The implementations are not limited in this context.

As shown in FIG. 8, device 800 may include a housing with a front 801 and a back 802. Device 800 includes a display 804, an input/output (I/O) device 806, and an integrated antenna 808. Device 800 also may include navigation features 812. I/O device 806 may include any suitable I/O device for entering information into a mobile computing device. Examples for I/O device 806 may include an alphanumeric keyboard, a numeric keypad, a touch pad, input keys, buttons, switches, microphones, speakers, voice recognition device and software, and so forth. Information also may be entered into device 800 by way of microphone 814, or may be digitized by a voice recognition device. As shown, device 800 may include a camera 805 (e.g., including at least one lens, aperture, and imaging sensor) and a flash 810 integrated into back 802 (or elsewhere) of device 800. The implementations are not limited in this context.

Various forms of the devices and processes described herein may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an implementation is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects described above may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that actually make the logic or processor.

While certain features set forth herein have been described with reference to various implementations, this description is not intended to be construed in a limiting sense. Hence, various modifications of the implementations described herein, as well as other implementations, which are apparent to persons skilled in the art to which the present disclosure pertains are deemed to lie within the spirit and scope of the present disclosure.

The following examples pertain to additional implementations.

By an example 1, a computer-implemented method of video coding, comprises A computer-implemented method of video coding, comprises obtaining image data of frames of a video sequence; determining multiple reference frames of a current frame of the video sequence, wherein the reference frames each have at least one motion compensated (MC) block of image data; generating a weight that factors noise, distortion variance, and dispersion distribution between at least one same MC block position of the multiple reference frames and a current block of the current frame; and generating denoised filtered image data including applying one of the weights to the image data of the at least one MC block.

By an example 2, the subject matter of example 1, wherein the weight factors a quantization parameter of an encoder arranged to receive the denoised filtered image data.

By an example 3, the subject matter of example 1 or 2, wherein the dispersion distribution is the distortion variance divided by distortion average between the same MC block position on the multiple reference frames and the current block, wherein distortion average is an average of distortions of the multiple reference frames.

By an example 4, the subject matter of any one of examples 1 to 3, wherein generating the weight comprises using a block distortion computed by using both a sum squared difference (SSD) between the current block and MC block and a variance of pixel image data in the current block.

By an example 5, the subject matter of example 4, wherein generating the weight comprises selecting a predetermined weight factor value depending on a magnitude of the block distortion.

By an example 6, the subject matter of example 4, wherein generating the weight comprises modifying the block distortion by an offset depending on a comparison of each of noise, distortion variance, and dispersion distribution associated with the current block and MC block to a threshold.

By an example 7, the subject matter of example 4, wherein generating the weight comprises factoring a weight block portion and a decay block portion, and wherein both the block distortion and noise are factored in both the weight block portion and the decay block portion.

By an example 8, the subject matter of any one of examples 1 to 7, wherein determining the reference frames comprises factoring: (1) an encoding parameter of an encoder to receive the denoised filtered image data, (2) a proximity of a scene change to the current frame, and (3) a correlation between image data on the current frame and image data on one of the reference frames.

By an example 9, a computer-implemented system comprises memory to store image data of frames of a video sequence; and processor circuitry communicatively coupled to the memory and arranged to operate by: determining multiple reference frames of a current frame of the video sequence, wherein the reference frames each have at least one motion compensated (MC) block of image data; generating a weight that factors noise, distortion variance, and dispersion distribution between the same MC block position of the multiple reference frames and a current block of the current frame; and generating denoised filtered image data including applying one of the weights to the image data of the MC block.

By an example 10, the subject matter of example 9 wherein the determining comprises selecting reference frames of the current frame depending at least in part on an encoding mode associated with a reference frame dependency structure of an encoder to receive the denoised filtered image data.

By an example 11, the subject matter of example 10, wherein the encoding mode is low delay or random access.

By an example 12, the subject matter of any one of examples 9 to 11, wherein the determining comprises selecting reference frames of the current frame depending at least in part on whether the current frame is within an available number of consecutive reference frames to a scene start or end, wherein the number includes zero.

By an example 13, the subject matter of any one of examples 9 to 12, wherein the determining comprises selecting reference frames of the current frame depending at least in part on a correlation of image data of the same pixel locations on the current frame and image data of one of the reference frames.

By an example 14, the subject matter of example 13, wherein the determining comprises selecting reference frames of the current frame depending at least in part on comparing a correlation value to a threshold.

By an example 15, at least one non-transitory article comprising at least one computer-readable medium having instructions stored thereon that when executed cause a computing device to operate by: obtaining image data of frames of a video sequence; determining multiple reference frames of a current frame of the video sequence, wherein the multiple reference frames each have at least one motion compensated (MC) block of image data; generating a weight that factors noise, distortion variance, and dispersion distribution between the same MC block position of the multiple reference frames and a current block of the current frame; and generating denoised filtered image data comprising applying one of the weights to the image data of the MC block.

By an example 16, the subject matter of example 15, wherein a number of determined reference frames before and after the current frame is different even though an equal number of available reference frames before and after the current frame are available, and when the available reference frames are closer to the current frame than a closest scene change in the video sequence.

By an example 17, the subject matter of example 15 or 16, wherein generating the weight comprises selecting a predetermined weight factor value depending at least in part on a computation of noise between the MC block and the current block.

By an example 18, the subject matter of any of examples 15 to 17, wherein generating the weight comprises selecting a predetermined weight factor value depending at least in part on a computation of distortion between the MC block and the current block.

By an example 19, the subject matter of any one of examples 15 to 18, wherein generating the weight comprises factoring an encoder quantization parameter, a difference between image data of the MC block data and image data of the current block, and a block distortion that factors sum of squared difference between the MC block and the current block and variance of the image data of the current block.

By an example 20, the subject matter of example 19, wherein the block distortion is modified by an offset depending at least in part by the noise, the distortion variance, and the dispersion distribution, wherein the dispersion distribution is the distortion variance divided by distortion average between the same MC block position on the multiple reference frames and the current block, wherein distortion average is an average of distortions of the multiple reference frames.

In a further example, at least one machine readable medium may include a plurality of instructions that in response to being executed on a computing device, causes the computing device to perform the method according to any one of the above examples.

In a still further example, an apparatus may include means for performing the methods according to any one of the above examples.

The above examples may include specific combination of features. However, the above examples are not limited in this regard and, in various implementations, the above examples may include undertaking only a subset of such features, undertaking a different order of such features, undertaking a different combination of such features, and/or undertaking additional features than those features explicitly listed. For example, all features described with respect to any example methods herein may be implemented with respect to any example apparatus, example systems, and/or example articles, and *vice versa.*

In a further example, at least one machine readable medium may include a plurality of instructions that in response to being executed on a computing device, causes the computing device to perform the method according to any one of the above examples.

In a still further example, an apparatus may include means for performing the methods according to any one of the above examples.

The above examples may include specific combination of features. However, the above examples are not limited in this regard and, in various implementations, the above examples may include undertaking only a subset of such features, undertaking a different order of such features, undertaking a different combination of such features, and/or undertaking additional features than those features explicitly listed. For example, all features described with respect to any example methods herein may be implemented with respect to any example apparatus, example systems, and/or example articles, and *vice versa.*

**Claims**

1. A computer-implemented method of video coding, comprising:

    obtaining image data of frames of a video sequence;
    determining multiple reference frames of a current frame of the video sequence, wherein the reference frames each have at least one motion compensated (MC) block of image data;
    generating a weight that factors noise, distortion variance, and dispersion distribution between at least one same MC block position of the multiple reference frames and a current block of the current frame; and
    generating denoised filtered image data including applying one of the weights to the image data of the at least one MC block.

2. The method of claim 1, wherein the weight factors a quantization parameter of an encoder arranged to receive the denoised filtered image data.

3. The method of claim 1 or 2, wherein the dispersion distribution is the distortion variance divided by distortion average between the same MC block position on the multiple reference frames and the current block, wherein distortion average is an average of distortions of the multiple reference frames.

4. The method of any one of claims 1-3, wherein generating the weight comprises using a block distortion computed by using both a sum squared difference (SSD) between the current block and MC block and a variance of pixel image data in the current block.

5. The method of claim 4, wherein generating the weight comprises selecting a predetermined weight factor value depending on a magnitude of the block distortion.

6. The method of claim 4, wherein generating the weight comprises modifying the block distortion by an offset depending on a comparison of each of noise, distortion variance, and dispersion distribution associated with the current block and MC block to a threshold.

7. The method of claim 4, wherein generating the weight comprises factoring a weight block portion and a decay block portion, and wherein both the block distortion and noise are factored in both the weight block portion and the decay block portion.

8. The method of any one of claims 1-7, wherein determining the reference frames comprises factoring: (1) an encoding parameter of an encoder to receive the denoised filtered image data, (2) a proximity of a scene change to the current frame, and (3) a correlation between image data on the current frame and image data on one of the reference frames.

9. A computer-implemented system comprising:

   memory to store image data of frames of a video sequence; and
   processor circuitry communicatively coupled to the memory and arranged to operate by:

   determining multiple reference frames of a current frame of the video sequence, wherein the reference frames each have at least one motion compensated (MC) block of image data;
   generating a weight that factors noise, distortion variance, and dispersion distribution between the same MC block position of the multiple reference frames and a current block of the current frame; and
   generating denoised filtered image data including applying one of the weights to the image data of the MC block.

10. The system of claim 9, wherein the determining comprises selecting reference frames of the current frame depending at least in part on an encoding mode associated with a reference frame dependency structure of an encoder to receive the denoised filtered image data.

11. The system of claim 10, wherein the encoding mode is low delay or random access.

12. The system of any one of claims 9-11, wherein the determining comprises selecting reference frames of the current frame depending at least in part on whether the current frame is within an available number of consecutive reference frames to a scene start or end, wherein the number includes zero.

13. The system of any one of examples 9-12, wherein the determining comprises selecting reference frames of the current frame depending at least in part on a correlation of image data of the same pixel locations on the current frame and image data of one of the reference frames.

14. The system of claim 13, wherein the determining comprises selecting reference frames of the current frame depending at least in part on comparing a correlation value to a threshold.

15. At least one non-transitory article having at least one computer-readable medium having instructions stored thereon that when executed cause a computing device to perform a method according to any one of examples 1-8.

# FIG. 1

# FIG. 2

M

110

Ref Frame Selection

current frame 202

Past MC Ref. Frames 204

Future MC Ref Frames 206

Video Analysis 208

SCD 212

Correlation Calculation 214

p1 to pJ

f1 to fK

Ref frame Decision 210

m_p

m_f

Encode/ Application Parameters 216

# FIG. 3

300

OBTAIN IMAGE DATA OF FRAMES OF A VIDEO SEQUENCE
302

DETERMINE MULTIPLE REFERENCE FRAMES OF A
CURRENT FRAME OF THE VIDEO SEQUENCE 304

WHEREIN THE REFERENCE FRAMES EACH HAVE AT
LEAST ONE MOTION COMPENSATED (MC) BLOCK
OF IMAGE DATA 306

COMPARE ONE OR MORE REFERENCE FRAMES
TO A PREVIOUS BLOCK OF IMAGE DATA OF A
PREVIOUS CURRENT FRAME 308

FACTOR ENCODER FRAME CONFIGURATION
MODE BEING USED BY ENCODER 310

FACTOR POSITION OF A SCENE CHANGE 312

FACTOR PIXEL IMAGE DIFFERENCES BETWEEN
THE CURRENT FRAME AND PREVIOUSLY
GENERATED REFERENCE FRAMES 314

GENERATE A WEIGHT THAT FACTORS NOISE, DISTORTION
VARIANCE, AND DISPERSION DISTRIBUTION BETWEEN AT
LEAST ONE SAME MC BLOCK POSITION AND THE CURRENT
BLOCK
316

GENERATE DENOISED FILTERED IMAGE DATA 318

APPLY ONE OF THE WEIGHTS TO THE IMAGE DATA OF
THE AT LEAST ONE MC BLOCK 320

# FIG. 4

400

Obtain image data of frame of a video sequence 402

Pre-process sufficiently for denoising 404

Set reference frame availability depending on encoder group of picture configuration being used 406

Random Access type Config.? 408 — NO → Use only Past Frames 410

YES

Perform scene change detection on video sequence 412

Limit available reference frames depending on scene change 414

Obtain initial m_p and/or m_f MC candidate reference frame positions depending on scene change and encoder GOP configuration 416

For each MC candidate reference frame m, compare frame m to current frame to be filitered to determine a correlation 418

Compare each correlation to a criterium 420

Maintain each MC reference frame for the current frame that satisifies the criterium 422

# FIG. 5A

500

Obtain a current frame of a video sequence 502

Perform motion estimation and motion compensation to match MC reference blocks to current blocks 503

Obtain Selected MC reference frames for the current frame 504

Generate noise estimate per block or per frame of the current frame 506

Compute distortion between MC reference block and corresponding current block 508

Generate distortion variance (distvar) and average for each current block and corresponding selected reference blocks 509

Compute dispersion distribution (DD) 510

Obtain base QP 512

(A)

# FIG. 5B

Ⓐ

500

Set Offset O = 1  514

Noise level > nsHighThld? 516 — NO

YES

DD > DDThld? 518 — NO

YES

distVar > varLowThld 520 — NO

YES

distVar > varHighThld 522 — YES → Set O = O + A 524

NO

Set O = O + B  526

QP > HighQPThld? 528 — NO

YES

DD > DDThld2? 530 — NO

YES

distVar > varLowThld2 532 — NO

YES

distVar > varHighThld2 534 — YES → Set O = O + C 536

NO

Set O = O + D  538

Ⓑ

# FIG. 5C

500

B

Compute weights based on distortion offsets
($w_o$) of each MC block 540

Compute block disclosure 542

Apply offset 544

Generate weights of MC blocks 546

Compute weight of equation 548

Factor distortions block_weight 550

Factor noise 552

Compute decay of equation 554

Obtain sw 556

Factor QP 558

Generate filtered image data 560

# FIG. 6

# FIG. 7

700

750

Display 720

User Interface 722

Platform 702

Antenna 710

Memory 712

Radio 718

Storage 711

Chipset 705

Applications 716

Processor 714

Graphics Subsystem 715

Content Delivery Device(s) 740

Content Services Device(s) 730

Network 760

# FIG. 8

800

801

802    810

805

804

806

812

814

808

| | EUROPEAN SEARCH REPORT | Application Number |
| | | EP 24 20 4095 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ENHORN JACK ET AL: "Improvements to a temporal filter for video coding", 2022 IEEE INTERNATIONAL SYMPOSIUM ON CIRCUITS AND SYSTEMS (ISCAS), IEEE, 27 May 2022 (2022-05-27), pages 834-838, XP034224393, DOI: 10.1109/ISCAS48785.2022.9937263 [retrieved on 2022-11-11] | 1-7,9-15 | INV. H04N19/117 |
| Y | * Abstract; Introduction.; page 834, column 1 * * Equation 2, 3; page 834, paragraph II - page 835 * * Equations 3 and 4; page 835, paragraph III.A * | 8 | |
| X | VANAM RAHUL ET AL: "Encoder-aware motion compensated temporal filtering for video compression", 20231004, vol. 12674, 4 October 2023 (2023-10-04), pages 126740J-126740J, XP060190618, ISSN: 0277-786X, DOI: 10.1117/12.2681958 ISBN: 978-1-5106-6562-0 | 1-7,9-15 | |
| Y | * page 1, paragraph 1; figure 1 * * Equations 1-2; page 2, paragraph 2 - page 3; figures 2-3 * | 8 | **TECHNICAL FIELDS SEARCHED (IPC)** H04N |
| X | US 2018/343448 A1 (POSSOS SEBASTIAN [US] ET AL) 29 November 2018 (2018-11-29) | 1-7,9-15 | |
| Y | * paragraph [0058] - paragraph [0064]; figures 1,2 * * paragraph [0067] - paragraph [0072]; figures 4-6A * | 8 | |

The present search report has been drawn up for all claims

| Place of search | Date of completion of the search | Examiner |
|---|---|---|
| Munich | 3 March 2025 | Moschetti, Fulvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 564 811 A1**

## ANNEX TO THE EUROPEAN SEARCH REPORT
## ON EUROPEAN PATENT APPLICATION NO.

EP 24 20 4095

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | Publication date |
|---|---|---|---|
| US 2018343448 A1 | 29-11-2018 | NONE | |

For more details about this annex : see Official Journal of the European Patent Office, No. 12/82

EPO FORM P0459

34